**Europäisches Patentamt**

**European Patent Office**

**Office européen des brevets**

(11) Numéro de publication : **0 511 890 A1**

(12) # DEMANDE DE BREVET EUROPEEN

(21) Numéro de dépôt : **92401071.3**

(22) Date de dépôt : **16.04.92**

(51) Int. Cl.⁵ : **F16L 37/08**, B29C 37/02

(30) Priorité : **29.04.91 FR 9105266**

(43) Date de publication de la demande :
**04.11.92 Bulletin 92/45**

(84) Etats contractants désignés :
**AT BE CH DE DK ES FR GB GR IT LI LU MC NL PT SE**

(71) Demandeur : **Etablissements CAILLAU**
**28, rue Ernest Renan**
**F-92130 Issy-les-Moulineaux (FR)**

(72) Inventeur : **Calmettes, Lionel**
**81, Faubourg d'Orléans**
**F-41200 Romorantin Lanthenay (FR)**
Inventeur : **Detable, Pascal**
**64, route de Selles**
**F-41130 Villedieu (FR)**

(74) Mandataire : **Descourtieux, Philippe et al**
**CABINET BEAU de LOMENIE 55 rue d'Amsterdam**
**F-75008 Paris (FR)**

(54) **Connexion rapide pour tube en matière plastique.**

(57)   Elément de connexion rapide d'un tuyau sur un tube en matière plastique, ledit élément étant susceptible d'être angulairement indexé par rapport au tube avant son engagement sur celui-ci et comportant essentiellement un manchon cylindrique terminal auquel sont liés, d'une part des moyens assurant, en coopération avec des moyens complémentaires liés au tube, le verrouillage du tube et de l'élément de connexion, d'autre part, des moyens de fixation du tuyau sur l'élément de connexion et enfin des moyens d'étanchéité entre le tube et le tuyau ou son élément de connexion. Sur au moins une zone appropriée dudit manchon terminal *(1a)* est disposée l'arête vive *(1c)* d'un organe élastique de raclage *(1b)*, ladite arête vive faisant, à l'état libre, légèrement saillie sur la surface intérieure du manchon *(1a)*.

FIG.1a

FIG.1b

EP 0 511 890 A1

L'invention concerne les connexions rapides d'un tuyau, par exemple en caoutchouc, sur un tube en matière plastique, ce dernier pouvant être un simple embout tubulaire disposé sur un appareil destiné à recevoir un fluide véhiculé par le tuyau souple, ou à permettre l'évacuation dudit fluide. Ce genre de connexion rapide est fréquemment utilisé dans l'industrie, en particulier dans l'industrie automobile pour assurer le raccordement des appareils du circuit de refroidissement ou d'alimentation en combustible d'un moteur.

La demanderesse a déjà décrit, notamment dans ses demandes de brevets européens EP-A 440.564 et E-PA 443.895, divers types de connexions rapides. D'une façon générale, ces connexions rapides, de même que celles proposées par la concurrence, d'une part, sont fixées au tuyau souple par divers moyens, d'autre part, comprennent au moins un élément comportant essentiellement un manchon cylindrique terminal destiné à recevoir le tube (ou embout tubulaire) au moment de son raccordement au tuyau souple. Ce manchon cylindrique terminal est lié, ainsi qu'on le sait, d'une part, à des moyens complémentaires de verrouillage du tube et de l'élément de connexion, d'autre part, à des moyens d'étanchéité entre le tube et le tuyau ou son élément de connexion.

On rappellera ici que les tubes en matière plastique, et notamment les embouts tubulaires, destinés à être raccordés au moyen des connexions rapides du genre en question, sont souvent réalisés par moulage ou plus généralement par des opérations qui peuvent laisser subsister de légères aspérités, par exemple des nervures longitudinales, à la surface extérieure du tube. De telles aspérités risquent d'endommager les joints d'étanchéité au cours de l'emmanchement du tube dans la connexion de sorte qu'il est souhaitable de procéder à leur élimination préalablement au raccordement.

On notera également que les connexions rapides du genre en question sont bien adaptées à une mise en place automatisée, puisqu'elles ne nécessitent que l'emmanchement axial de la connexion sur le tube, éventuellement après "indexation angulaire" de l'un par rapport à l'autre. Ainsi, il est fréquemment possible, au moment de la fabrication de la connexion rapide, de connaître la position angulaire -par exemple par rapport aux moyens complémentaires de verrouillage prévus sur la connexion du tube- des aspérités risquant de subsister à la surface extérieure du tube.

On indiquera enfin que les publications EP-A 197.874 et DE-A 2.622.269 concernent des connexions rapides du genre en question.

Dans ces dispositifs, le verrouillage du tube ou de l'embout tubulaire par rapport au manchon de la connexion est obtenu au moyen de pattes flexibles d'accrochage, dont les extrémités libres sont susceptibles de s'ancrer dans la paroi du tube. L'inclinaison desdites pattes par rapport à l'axe de la connexion est donc telle qu'elle assure leur arc-boutement à l'encontre de tout mouvement de déboîtement du tube.

Tenant compte des observations qui précèdent, la demanderesse a eu l'idée d'améliorer les connexions rapides du genre en question pour permettre l'élimination des aspérités du tube sans intervention manuelle, notamment dans le cas où il est prévu une indexation angulaire de la connexion par rapport au tube au moment de l'emmanchement.

Selon l'invention, sur au moins une zone appropriée du manchon terminal de l'élément de la connexion rapide, est disposée l'arête vive d'un organe élastique de râclage dont le plan, au voisinage de l'arête vive, est incliné vers l'extrémité d'entrée et vers l'axe dudit manchon, en définissant avec cet axe un angle au plus égal à 90°, ladite arête vive faisant, à l'état libre, légèrement saillie sur la surface intérieure du manchon.

En raison de sa simplicité, l'invention peut être mise en oeuvre sur de nombreux types de connexions rapides, ainsi que l'homme du métier le conçoit facilement. Elle sera d'ailleurs bien comprise et ses avantages apparaîtront au cours de la description qui va suivre de deux modes d'exécution, en référence au dessin annexé dans lequel :

- La figure 1a et la figure 1 b sont des vues partielles en perspective des extrémités d'une connexion rapide et du tube auquel elle doit être raccordée
- La figure 1c est une vue analogue à la figure 1a dans le cas d'une variante de réalisation
- La figure 2a et la figure 2b sont des vues analogues aux deux premières dans le cas d'un autre mode d'exécution de l'invention.

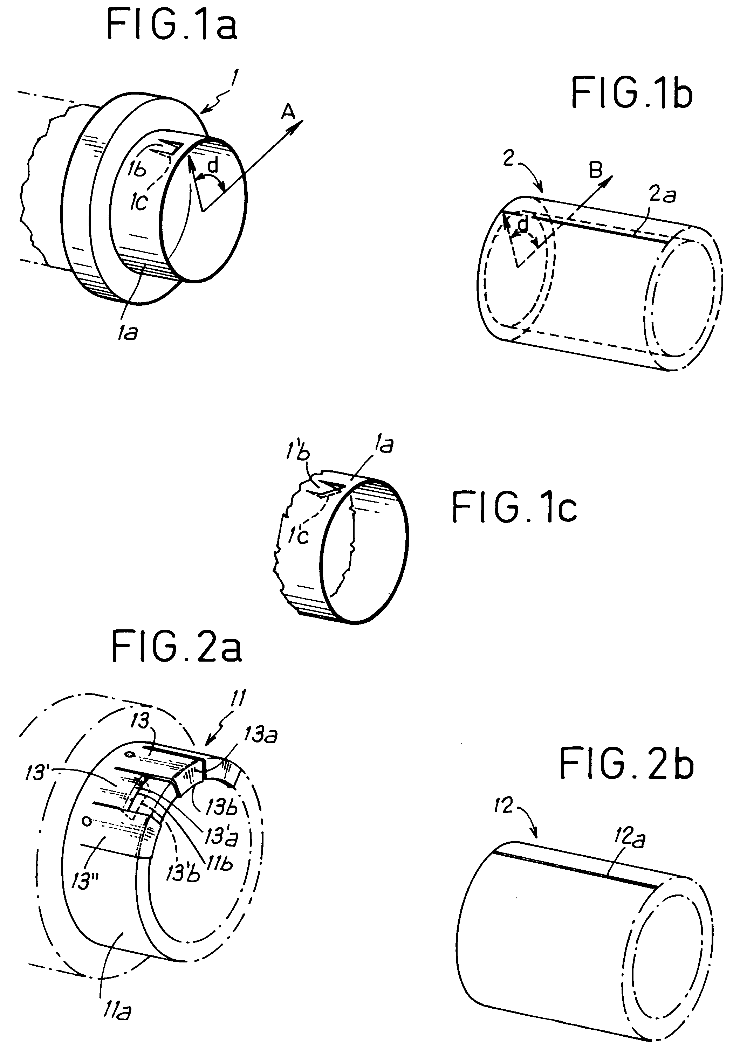

Si l'on se reporte tout d'abord aux figures 1a et 1b on voit l'extrémité d'une connexion rapide **1** montée sur un tuyau souple non représenté dont la surface extérieure est simplement schématisée sur la gauche de la figure la. Cette connexion rapide sera par exemple du type décrit dans la demande de brevet européen EP-A-440.564. Elle est constituée par divers éléments, l'un d'eux comportant un manchon cylindrique terminal **1a**.

Un embout tubulaire **2** en matière plastique est disposé en regard du manchon **1a**, prêt à être emmanché dans celui-ci.

La connexion rapide **1** comporte, en général en retrait par rapport au bord terminal du manchon **1a**, au moins un joint annulaire situé à l'intérieur de la connexion et susceptible, après emmanchement du tube, de coopérer avec la surface extérieure de ce dernier pour assurer l'étanchéité du raccordement.

D'autre part, des moyens de verrouillage non représentés mais dont la position est repérée par la flèche radiale **A** sont prévus sur la connexion **1** et sont destinés à coopérer avec des moyens complémentaires disposés sur le tube **2**. Ces moyens complémentaires ne sont pas eux-mêmes représentés mais leur position est repérée par la flèche radiale *B*. La connexion *1*, visible sur le dessin, étant sur le point d'être emmanchée sur le tube *2*, les flèches radiales *A* et *B* sont parallèles et orientées de la même façon, la connexion ayant été indexée angulairement par rapport au tube.

En raison des nécessités de sa fabrication, le tube *2* présente sur sa surface extérieure au moins un zone d'aspérités, par exemple une ligne longitudinale d'aspérités désignée par la référence *2a*. Cette ligne peut être continue et provient généralement de "bavures" dues au moulage ou à d'autres opérations. Pour un processus déterminé de fabrication du tube, la ligne d'aspérités *2a* occupe toujours la même position et peut, par conséquent, être repérée angulairement par rapport au tube, par exemple par rapport à ses moyens de verrouillage.

Dans l'exemple représenté la ligne *2a* d'aspérités est située à une "distance angulaire" *d* de la flèche *B*.

Il va de soi que l'on peut définir autant de "distances angulaires" *d* qu'il existe de lignes d'aspérités *2a* et plus généralement de zone d'aspérités angulairement repérées sur la surface extérieure du tube.

Comme on l'a déjà indiqué plus haut, il est particulièrement souhaitable d'éliminer les aspérités de la surface extérieure du tube *2* avant qu'elles n'atteignent la zone de la connexion dans laquelle l'étanchéité sera réalisé.

A cet effet, la paroi du manchon *1a*, réalisé de préférence en métal, comporte une découpe en forme de *U* faisant apparaître une patte flexible *1b*, dont l'extrémité libre est dirigée vers le bord terminal du manchon. A l'état libre, ainsi qu'on le voit, la patte *1b* est légèrement enfoncée vers l'intérieur du manchon de sorte que son plan est incliné, à la fois vers l'extrémité d'entrée du manchon *1a* et vers l'axe de celui-ci ; ainsi son arête terminale interne *1c* qui est vive, fait saillie par rapport à la surface intérieure du manchon.

L'arête terminale *1c* est généralement perpendiculaire à l'axe du manchon *1a*, mais il pourra être préféré une arête *1'c* inclinée par rapport à cet axe, telle qu'on l'a représenté sur la figure 1 c.

La patte *1b* est située sur la manchon *1a* de telle façon que son axe longitudinal soit décalé, par rapport aux moyens de verrouillage (flèche *A*) portés par la connexion *1*, d'une "distance angulaire" sensiblement égale à la distance *d* précédemment définie. Là encore il sera avantageux de prévoir autant de pattes *1b* que l'on aura défini de "distances angulaires" *d* sur le tube.

Ainsi la patte *1b* constitue un organe élastique de râclage dont l'arête vive interne *1c* (ou *1'c*) vient en contact avec la surface extérieure du tube *2* au cours de son emmanchement dans la connexion *1*. Cet organe de râclage ayant la même position angulaire sur la connexion *1* que les aspérités *2a* sur le tube *2*, le simple emmanchement du tube provoque l'ébavurage souhaité des aspérités avant que la surface extérieure du tube n'atteigne le ou les joints d'étanchéité situés à l'intérieur de la connexion. Cependant on notera ici que l'inclinaison de la patte *1b* et son élasticité interdisent tout risque d'arc-boutement sur la paroi du tube *2*, aussi bien au cours de son montage dans le manchon *1* que lors du démontage.

Si l'on se reporte maintenant aux figures 2a et 2b on voit une autre réalisation de l'invention, dans laquelle la connexion *11* est, par exemple, réalisée en matière plastique. Sur le manchon cylindrique *11a*, une patte métallique *13* est fixée par tout moyen approprié. Son extrémité libre *13a* est située à une distance suffisante du moyen de fixation, de sorte que la patte est élastiquement déformable, au moins dans le sens radial. Cette extrémité libre *13a* est repliée vers l'axe du manchon et fait avec ce dernier un angle au plus égal à 90°. Ainsi à l'état libre, son arête terminale *13b* fait légèrement saillie à l'intérieur du manchon *11a*. Comme on le voit sur la figure 2a la patte *13* peut être associée à plusieurs autres pattes *13'*, *13"* ..., contiguës ou non, disposées sur tout ou partie de la périphérie du manchon *11a*.

Dans le cas où il n'existe qu'un nombre limité de pattes *13*, elles seront angulairement disposées sur le manchon *11* de façon à correspondre aux lignes d'aspérités *12a* du tube *12* ainsi que cela a été expliqué en référence aux figures 1 a et 1b.

Cependant la variante de réalisation représentée sur les figures 2a et 2b est principalement destinée à équiper une connexion qui ne nécessite pas d'indexation angulaire au moment de son emmanchement sur le tube à raccorder.

On indiquera encore que l'extrémité libre *13'a* d'une patte *13'* peut traverser une fente *11b* du manchon pour atteindre la surface intérieure de ce dernier.

De même que dans la réalisation représentée sur les figures 1a et 1b les pattes *13*, *13'*, *13"* etc. ..., quels que soient leur nombre et leur position angulaire sur le manchon, constituent des organes élastiques de râclage ; au cours de l'emmanchement du tube dans le manchon, leurs arêtes vives faisant saillie sur la surface intérieure du manchon assurent l'ébavurage des aspérités, telles que celles repérées en *12a*, situées sur la surface extérieure du tube *12*. En raison de l'élasticité des pattes et surtout de l'inclinaison de leurs extrémités, il n'y a aucun risque d'ancrage dans la paroi du tube *12*, susceptible d'interdire le déboîtement de ce dernier pour le démontage de la connexion.

**Revendications**

1. Elément de connexion rapide d'un tuyau sur un tube en matière plastique, ledit élément étant susceptible d'être angulairement indexé par rapport au tube avant son engagement sur celui-ci et comportant essentiellement un manchon cylindrique terminal auquel sont liés, d'une part des moyens assurant, en coopération avec des moyens complémentaires liés au tube, le verrouillage du tube et de l'élément de connexion, d'autre part, des moyens de fixation du tuyau sur l'élément de connexion et enfin des moyens d'étanchéité entre le tube et le tuyau ou son élément de connexion, caractérisé en ce que sur au moins une zone appropriée dudit manchon terminal *(1a)* est disposée l'arête vive *(1c)* d'un organe élastique de râclage *(1b)* dont le plan, au voisinage de l'arête vive, est incliné à la fois vers l'extrémité d'entrée et vers l'axe dudit manchon, en définissant avec cet axe un angle au plus égal à 90°, ladite arête vive faisant à l'état libre, légèrement saillie sur la surface intérieure du manchon *(1a)*.

2. Elément de connexion rapide selon la revendication 1, caractérisé en ce que l'organe élastique de râclage est constitué par une pièce *(13)* indépendante du manchon et fixée sur celui-ci.

3. Elément de connexion rapide selon la revendication 1, caractérisé en ce que l'organe élastique de râclage *(1a)* fait partie intégrante du manchon.

4. Elément de connexion rapide selon l'une quelconque des revendications précédentes, caractérisé en ce que l'arête vive *(1c)* de l'organe de râclage est sensiblement perpendiculaire à l'axe du manchon.

5. Elément de connexion rapide selon l'une quelconque des revendications 1 à 3, caractérisé en ce que l'arête vive *(1'c)* de l'organe de râclage est inclinée par rapport à l'axe du manchon.

FIG.1a

FIG.1b

FIG.1c

FIG.2a

FIG.2b

Office européen
des brevets

**RAPPORT DE RECHERCHE EUROPEENNE**

Numero de la demande

EP 92 40 1071

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 197 874 (LEGRIS)<br>* abrégé; figures 1-3,11 *<br>--- | 1-2,5 | F16L37/08<br>B29C37/02 |
| A | DE-A-2 622 269 (TECHNOFORM)<br>* figures *<br>--- | 1-2,5 | |
| A | FR-A-2 558 235 (POUTRAIT-MORIN)<br>* abrégé; figures *<br>--- | 1,4 | |
| A | US-A-4 711 472 (SCHNELL)<br>* figures 1-2 *<br>----- | 3 | |

**DOMAINES TECHNIQUES RECHERCHES (Int. Cl.5)**

F16L
B29C

Le présent rapport a été établi pour toutes les revendications

| Lieu de la recherche | Date d'achèvement de la recherche | Examinateur |
|---|---|---|
| LA HAYE | 02 JUILLET 1992 | NARMINIO A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)